# EUROPÄISCHE PATENTSCHRIFT

(11) **EP 3 385 137 B1**
(45) Veröffentlichungstag und Bekanntmachung des Hinweises auf die Patenterteilung: **15.05.2019**
(21) Anmeldenummer: 18155439.5
(22) Anmeldetag: 07.02.2018
(51) Int. Cl.: B60T 17/22, F16D 65/00, F16D 65/38, F16D 66/00, F16D 66/02

(54) **VERFAHREN ZUR LÜFTSPIELBESTIMMUNG EINER GLEITSATTEL-SCHEIBENBREMSE**
METHOD FOR DETERMINING THE PLAY OF A FLOATING CALLIPER DISC BRAKE
PROCÉDÉ DE DÉTERMINATION DE JEU D'UN FREIN À DISQUE À ÉTRIER COULISSANT

(30) Priorität: 23.02.2017 DE 102017103763
(43) Veröffentlichungstag der Anmeldung: 10.10.2018
(73) Patentinhaber: BPW Bergische Achsen KG, 51674 Wiehl (DE)
(72) Erfinder: Manz, Stefan, 51674 Wiehl (DE); Schneider, Peter, 51597 Morsbach (DE)
(74) Vertreter: Bungartz Christophersen Partnerschaft mbB Patentanwälte

(56) Entgegenhaltungen:
- WO-A1-2015/014450
- DE-A1- 3 707 821
- DE-A1- 10 211 813
- DE-A1-102012 017 961
- DE-A1-102015 001 152

## Beschreibung

Die Erfindung betrifft ein Verfahren zur Kontrolle des Bremslüftspiels einer Gleitsattel-Scheibenbremse, die einen chassisfesten Bremsträger, eine Bremsscheibe und einen die Bremsscheibe sowie Bremsbeläge beidseits der Bremsscheibe übergreifenden Bremssattel umfasst, wobei ein Bremsbelag unmittelbar gegen den Bremssattel und ein anderer Bremsbelag gegen eine die Betätigungskraft der Scheibenbremse erzeugende Zuspanneinrichtung abgestützt ist, bei dem
- mittels eines Wegsensors die Verschiebung des Bremssattels relativ zu dem Bremsträger als Wegsignal erfasst wird,
- der Bremsbetätigungsdruck durch einen Drucksensor erfasst wird,
- Zeiten und/oder Zeitintervalle erfasst werden,
und diese Weg-, Druck- und Zeitsignale einer Steuer- und Kontrolleinheit zugewiesen werden.

Gleitsattel-Scheibenbremsen umfassen einen längsbeweglich an einem achsfesten Bremsträger gelagerten Bremssattel. Die Bremsscheibe der Scheibenbremse ist in Längsrichtung der Fahrzeugachse positionsfest angeordnet. In der Regel erfolgt die Zuspannung der Scheibenbremse einseitig, indem der äußere der beiden Bremsbeläge der Scheibenbremse unmittelbar gegen den Bremssattel abgestützt ist und der andere Bremsbelag von der Zuspanneinrichtung mit einer Zuspannkraft beaufschlagt wird. Mit zunehmendem Verschleiß der Bremsbeläge, insbesondere der Reibbeläge, aber auch der Bremsscheibe selbst, wandert der Bremssattel mehr und mehr nach fahrzeuginnen. Um bei zunehmendem Verschleiß einen kontinuierlich zunehmenden Zuspannweg zu kompensieren, verfügen solche Scheibenbremsen über eine Nachstelleinrichtung, um zu gewährleisten, dass das Bremslüftspiel stets in einem bestimmtem Rahmen bleibt.

Dabei ist das Bremslüftspiel der Abstand zwischen Bremsbelag und Bremsscheibe. Ein solcher Abstand ist erforderlich, um eine ungehinderte Rotation der sich mit dem Fahrzeugrad mit-rotierenden Bremsscheibe sicherzustellen, und ein ungewolltes Schleifen im Freilauf zu vermeiden. Beim Zuspannen der Bremse legen sich die Bremsbeläge nach einer über die Zuspanneinrichtung bzw. den Sattel vermittelten Kraftübertragung an der Bremsscheibe an. Bevor es zur Anlage kommt muss jedoch zunächst das tatsächlich vorhandene Bremslüftspiel überwunden werden. Obwohl das Bremslüftspiel durch die Nachstelleinrichtung möglichst konstant gehalten wird, kann dieses einen für die Funktionalität der Bremse kritischen Wert erreichen. Das Bremslüftspiel ist also immer auch abhängig vom Bremsbelagverschleiß.

Es ist bekannt solche Scheibenbremsen mit sensorischen Einrichtungen zur Bestimmung des Bremsbelagverschleißes zu versehen. Diese dienen dazu auch ohne Expertenservice z. B. im Rahmen einer Inspektion oder Reparatur des Fahrzeugs einen Ist-Wert für den Bremsbelagverschleiß anzugeben. Auch ist es möglich den Fahrer des Fahrzeugs auf einen für die Funktionalität der Bremse kritischen Wert des Bremsbelagverschleißes durch Warnsignale in der Bordanzeige des Cockpits hinzuweisen, z. B. durch Aufblinken eines Warnsignals. Das Dokument WO2015/014450 A1, beschreibt wie die obere und untere Grenzwert des Luftspiels variabel sind, und abhängig von mindestens einer momentanen oder vergangenen das Lüftspiel beeinflussenden Betriebszustandsgröße, wie, z.B. Temperatur, Temperatur/Zeit, bei Belag und/oder Scheibe, Bremsdruck, Bremskraft oder Bremshub. Das Lüftspiel wird in diesem Dokument nicht als Durchschnitt von mehreren Messungen gemessen.

Der Bremsbelagverschleiß einer Gleitsattel-Scheibenbremse lässt sich beispielsweise über ein in der DE 102 11 813 A1 beschriebenes Ultraschallverfahren sensieren. Dazu sind Ultraschallsender und Ultraschallempfänger gegenüber der Bremsscheibe und den Rückenplatten der Bremsbeläge ortsfest installiert. Über einen an sich bekannten Signalweg werden die Ultraschallsignale zunächst transmittiert, reflektiert und nach der Detektion an eine Auswerteelektronik weitergeleitet.

Bei den in der DE 37 07 821 A1 und in der DE 10 2010 017 961 A1 beschriebenen Verfahren zur Bestimmung des Bremsbelagverschleißes werden Verschiebungen des Bremssattels relativ zum Bremsträger durch einen Positions- oder Wegsensor als Wegsignale erfasst. Diese werden von einer Steuer- und Kontrolleinheit verarbeitet und weisen den Fahrer bei Erreichen eines vorgegebenen, kritischen Werts darauf hin, die Bremsbeläge auszutauschen. Auch das Bremslüftspiel selbst kann, wie in der DE 10 2015 001 152 A1 beschrieben, bestimmt und überwacht werden. In dem in DE 10 2015 001 152 A1 beschriebenen Verfahren werden bei ungebremster Fahrt Positionswerte mittels eines Verschleißsensors aufgezeichnet und mit zugehörigen Bremsdrücken korreliert. Nach Interpolation werden die Positionswerte als Funktion des Bremsdrucks dargestellt und daraus Ist-Werte des Bremslüftspiels bestimmt. Wenngleich ein solches Verfahren an sich überzeugt, sind solche auf mathematischen Interpolationsmethoden basierende Verfahren teils störanfällig und ungenau.

Der vorliegenden Erfindung liegt daher die **Aufgabe** zugrunde, ein für eine kontinuierliche elektronische Auswertung geeignetes Verfahren zur Kontrolle des Bremslüftspiels zwischen den Bremsbelägen und der Bremsscheibe einer Gleitsattel-Scheibenbremse bereitzustellen, wobei die Lüftspielbestimmung mit einer verbesserten Reproduzierbarkeit und Genauigkeit erfolgen soll.

Zur **Lösung** dieser Aufgabe wird ein Verfahren zur Kontrolle des Bremslüftspiels vorgeschlagen, welches durch die folgenden Schritte gekennzeichnet ist:
a) bei nicht aktivierter und auch für ein vorangegangenes Zeitintervall Δt nicht aktivierter Zuspanneinrichtung Erfassen einer Mehrzahl von Wegsignalen S₁, S₂, ... und Bilden eines Mittelwerts S_{M} der so erfassten Wegsignale,
b) nach der Aktivierung der Zuspanneinrichtung Erfassen eines Drucks p₁ zu einem Zeitpunkt t₁, zu dem es erstmals zum Anlegen beider Bremsbeläge an der Bremsscheibe kommt, und eines Drucks p₂ zu einem Zeitpunkt t₂, zu dem die Zuspanneinrichtung Bremsdruck aufgebaut hat,
c) Erfassen einer Mehrzahl von Wegsignalen W₁, W₂, ... innerhalb des Zeitintervalls t₁ bis t₂ und bilden eines Mittelwerts S_{A} der so erfassten Wegsignale,
d) Berechnung des Differenzwertes S_{A} - S_{M},
e) Treffen einer negativen Lüftspielfeststellung in der Steuer- und Kontrolleinheit, sofern der berechnete Differenzwert S_{A} - S_{M} einen vorgegebenen Grenzwert überschreitet.

Das erfindungsgemäße Verfahren zur Kontrolle des Bremslüftspiels ist insbesondere für die Anwendung bei Gleitsattel-Scheibenbremsen geeignet, aber nicht darauf beschränkt. Solche Scheibenbremsen umfassen einen chassisfesten Bremsträger, eine Bremsscheibe und einen die Bremsscheibe sowie Bremsbeläge beidseits der Bremsscheibe übergreifenden Bremssattel, wobei ein Bremsbelag unmittelbar gegen den Bremssattel und ein anderer Bremsbelag gegen eine die Betätigungskraft der Scheibenbremse erzeugende Zuspanneinrichtung abgestützt ist.

Die Scheibenbremse umfasst einen Wegsensor, mittels dessen die Verschiebung des Bremssattels relativ zu dem Bremsträger als Wegsignal erfasst wird. Ein solcher Sensor kann innerhalb oder außerhalb des Bremssattels angeordnet sein. Auch eine teilweise Anordnung innerhalb und außerhalb des Sattels ist möglich. Ferner ist eine Anordnung am Bremsträger möglich. Ein solcher Wegsensor kann synonym auch als Positionssensor bezeichnet werden.

Zur Verwirklichung des erfindungsgemäßen Verfahrens umfasst die Scheibenbremse zudem einen den Bremsbetätigungsdruck erfassenden Drucksensor. Ein solcher Drucksensor kann innerhalb oder außerhalb des Bremssattels angeordnet sein. Der Bremsbetätigungsdruck kann aus dem in der pneumatischen Betätigungseinrichtung vorliegenden Druck oder dem an der Zuspanneinrichtung aufgebauten Druck bestimmt werden. Alternativ zur Druckbestimmung können auch die zwischen Bremsbelag und Bremsscheibe wirkenden Kräfte über einen Kraftsensor gemessen und in dazu proportionale Druckwerte umgerechnet werden.

Auch werden im Rahmen des Verfahrens zur Bestimmung des Bremslüftspiels Zeiten und/oder Zeitintervalle erfasst. Diese können simultan mit den Weg- und Drucksignalen aufgezeichnet und mit diesen korreliert werden. Die Zeitmessung erfolgt über herkömmliche digitale Zeitmesseinheiten. Während oder nach der Messung der Weg-, Druck- und Zeitsignale werden diese einer Steuer- und Kontrolleinheit zugewiesen werden.

Die Weg- bzw. Positionssignale, die Druck- bzw. Kraftsignale sowie die Zeiten können selbstverständlich auch einzeln und separat gemessen und aufgezeichnet werden.

Zur Bestimmung des Bremslüftspiels wird zunächst bei nicht aktivierter und auch für ein vorangegangenes Zeitintervall Δt nicht aktivierter Zuspanneinrichtung eine Mehrzahl von Wegsignalen S₁, S₂, ... erfasst und ein Mittelwert S_{M} der so erfassten Wegsignale gebildet. Der Mittelwert S_{M} ist dabei ein Verschleißwert der Bremsbeläge. Während dieses nicht aktivierten Zustandes der Zuspanneinrichtung kann die Bremsscheibe frei mit dem Fahrzeugrad rotieren, ohne dass der Rotation Reibkräfte der Bremsbeläge entgegenstehen. Nach Aktivierung der Zuspanneinrichtung wird ein Druck p₁ zu einem Zeitpunkt t₁ erfasst, zu dem es erstmals zum Anlegen beider Bremsbeläge an der Bremsscheibe kommt. Typischerweise liegt der Bremsdruck dann bei ungefähr 1,3 bar. Ferner wird ein Druck p₂ zu einem Zeitpunkt t₂ erfasst, zu dem die Zuspanneinrichtung Bremsdruck aufgebaut hat. Hier liegt der Bremsdruck typischerweise bei ungefähr 1,5 bar. Innerhalb des Zeitintervalls t₁ bis t₂ wird eine Mehrzahl von Wegsignalen W₁, W₂, ... erfasst und aus den so erfassten Wegsignalen ein Mittelwert S_{A} gebildet. Daraufhin wird aus den zuvor bestimmten Mittelwerten ein Differenzwert S_{A} - S_{M} berechnet. Letztlich wird eine negative Lüftspielfeststellung in der Steuer- und Kontrolleinheit getroffen, sofern der berechnete Differenzwert S_{A} - S_{M} einen vorgegebenen Grenzwert überschreitet. Dies kann dem Fahrer des Fahrzeugs dann durch eine digitale Anzeige oder ein Warnsignal in Form einer aufblinkenden Warnleuchte angezeigt werden.

Durch die Mittelwertbildung der Wegsignale wird die Zuverlässigkeit und Genauigkeit des Verfahrens deutlich erhöht, denn dadurch wird die Berechnungsgrundlage der Lüftspielwerte nicht nur aus einzelnen Datenpunkten, sondern einer Vielzahl von Datenpunkten gebildet. Die natürliche Varianz einer Datenerfassung und herkömmliche Messunsicherheiten werden dadurch herausgemittelt.

Für das erfindungsgemäße Verfahren ist vorteilhaft, dass vor der Bestimmung des Lüftspiels nach einem Bremsvorgang, eine Wartezeit Δt mit nicht aktivierter Zuspanneinrichtung durchlaufen werden muss. Dadurch ist gewährleistet, dass alle während eines Zuspannvorgangs ermittelten Parameter auf ein Grundniveau zurückkehren und erst nach einem gewissen Zeitablauf eine erneute Messung vorgenommen werden kann. Bei freier Fahrt, d. h. bei nicht aktivierter Zuspanneinrichtung, kommt es immer auch zu geringen statistisch verteilten Verschiebungen des Bremssattels relativ zum Bremsträger. Diese Grundoszillation wird ebenfalls durch Mittelwertbildung der Wegsignale herausgemittelt.

Die Mittelwerte S_{M}, S_{A} werden dabei über ein mathematisches Mittelungsverfahren aus den Wegsignalen berechnet, insbesondere durch exponentielle Glättung. Auch sämtliche anderen mathematischen Mittelungsverfahren können zur Mittelwertbestimmung der Wegsignale herangezogen werden. Das Verfahren der exponentiellen Glättung ist jedoch zu bevorzugen, wenn statistische Messwertverteilungen vorliegen.

Im Rahmen des erfindungsgemäßen Verfahrens ist es ferner vorteilhaft, die Weg- und Drucksignale kontinuierlich oder diskontinuierlich in der gleichen Zeitdomäne aufzunehmen. Dann können die Weg- und Drucksignale zu definierten Zeitpunkten gegenübergestellt oder die zeitaufgelösten Weg- und Druckfunktionen verglichen werden. Ferner erhöht eine Datenaufnahme in nur einer Zeitdomäne die Zuverlässigkeit und Genauigkeit der Messung. Kontinuierliche Datenaufnahme meint in diesem Kontext, dass die Weg- und Drucksignale zu jeder Zeit aufgenommen und gespeichert werden. Diskontinuierliche Datenaufnahme bedeutet, dass in gewissen Abständen entsprechende Daten aufgenommen werden. Solche Intervalle zur Datenaufnahme können vom Hersteller oder vom Fahrer des Fahrzeugs vorgegeben und in die Kontroll- und Steuereinheit eingegeben werden.

Im gleichen Zusammenhang ist es vorteilhaft, die Weg- und Drucksignale simultan als Funktion der Zeit aufzunehmen. Somit können die Zeitsignale als einziger Datensatz aufgenommen, gespeichert und den jeweiligen Weg- und Drucksignalen zugeordnet werden.

Zur einfacheren Darstellung und Auswertung der Daten können die Wegsignale als Funktion des Betätigungsdrucks und die Drucksignale als Funktion des Weges dargestellt werden. Die mathematische Datenverarbeitung kann durch eine solche auf den Datenkurven basierenden Darstellung vereinfacht sein.

Im Rahmen des erfindungsgemäßen Verfahrens ist weiterhin vorteilhaft, dass die zeitaufgelösten Weg- und Drucksignale in der Steuer- und Kontrolleinheit verarbeitet und gespeichert werden können. Auch kann die Datenverarbeitung in einer mit der Steuer- und Kontrolleinheit gekoppelten Recheneinheit erfolgen. Die Steuer- und Kontrolleinheit ist selbst als Recheneinheit zu verstehen. Die Daten können über geeignete Datenübermittlungseinrichtungen z. B. per Funk, WLAN oder andere kabellose Übertragungswege an externe Datenverarbeitungseinrichtungen übermittelt und dort ausgewertet werden. Auch kann die Steuer- und Kontrolleinheit dergestalt sein, dass sie einen Empfänger für externe Daten oder Befehle aufweist. So kann beispielsweise nach externer Datenauswertung ein entsprechendes Warnsignal an die Kontroll- und Steuereinheit und damit an das Fahrzeug bzw. den Fahrzeugführer übermittelt werden. Selbstverständlich weist die Steuer- und Kontrolleinheit in einem solchen Fall auch ein Sendemodul auf.

Die Bestimmung des Verschleißwertes und/oder des Lüftspiels ist gemäß erfindungsgemäßem Verfahren nur während der Fahrt möglich. Denn zur Berechnung werden dynamische Werte aus dem Fahrbetrieb benötigt und es soll gerade keine manuelle Inspektion des Lüftspiels beim Stillstand des Fahrzeugs erfolgen. Somit kann dem Fahrzeugführer während der Fahrt des Fahrzeugs ein aktueller Wert des Bremslüftspiels angezeigt werden.

In einer vorteilhaften Ausgestaltung des Verfahrens wird bei Vorliegen einer negativen Lüftspielfeststellung ein Warnsignal erzeugt und in der Bordelektronik des Fahrzeugs angezeigt, insbesondere durch Aufblinken einer Warnleuchte. Dies ermöglicht dem Fahrzeugführer eine leichte Kenntnisnahme der Lüftspielsituation und damit der Funktionsfähigkeit der Scheibenbremsen. Auch eine anderweitige Anzeige der Lüftspielwerte ist möglich.

Weitere Einzelheiten und Vorteile der Erfindung ergeben sich aus der nachfolgenden Beschreibung eines in den Figuren schematisch dargestellten Ausführungsbeispiels. Es zeigen:
- Fig. 1: eine stark schematisch gehaltene Darstellung einer Gleitsattel-Scheibenbremse für welche das erfindungsgemäße Verfahren zur Anwendung kommen kann;
- Fig. 2: in Darstellung übereinander den zeitlichen Verlauf einerseits der Drucksignale eines Drucksensors, und andererseits der Wegsignale eines Wegsensors.

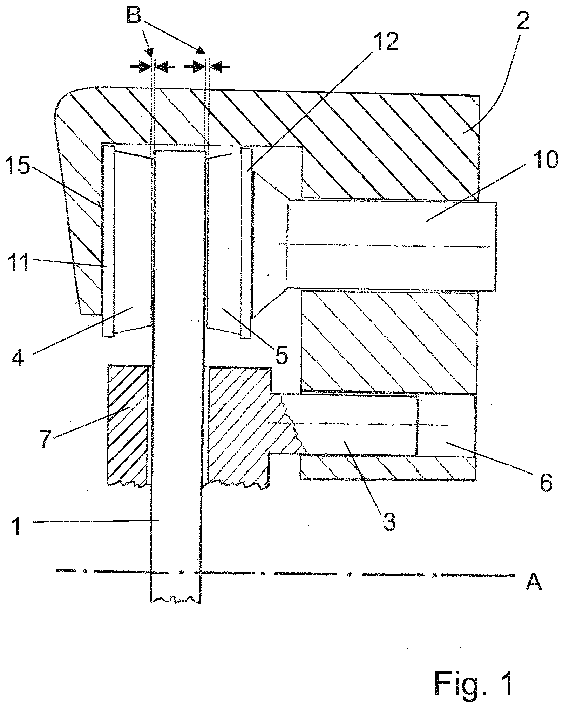

Die Figur 1 zeigt in einer stark schematischen Darstellung eine Gleitsattel-Scheibenbremse, bei welcher das erfindungsgemäße Verfahren zur Kontrolle des Bremslüftspiels B zur Anwendung kommt. Gemäß Figur 1 rotiert die Bremsscheibe 1 der Gleitsattel-Scheibenbremse auf einer Raddrehachse A. Starr an einem nicht dargestellten Achselement des Fahrzeugs ist ein Bremsträger 2 befestigt. Basierend auf dem grundlegenden Konzept von Gleitsattel- bzw. Schwimmsattelscheibenbremsen ist ein Bremssattel 7 der Scheibenbremse an dem Bremsträger 2 mittels einer Längsführung gelagert.

Die Längsführung setzt sich zusammen aus einem mit seinem einen Ende starr an dem Bremsträger 2 befestigten Führungsholm 3 sowie einer korrespondierenden, in dem Bremssattel 7 ausgebildeten Führungsbohrung 6. Üblicherweise verfügen Scheibenbremsen über zwei solcher Längsführungen.

Ferner ist innerhalb des Bremssattels 7 eine Zuspanneinrichtung angeordnet, deren Bestandteil unter anderen ein parallel zu der Raddrehachse A geführter Druckstempel 10 ist. Mit Hilfe der Zuspanneinrichtung wird der Betätigungsdruck p auf den Druckstempel 10 übertragen und eine Kraft auf den fahrzeuginneren Bremsbelag 5 der Scheibenbremse ausgeübt. Die Zuspannung des Druckstempels 10 kann entweder hydraulisch oder pneumatisch erfolgen, bei Nutzfahrzeugbremsen in der Regel pneumatisch. Dazu wird der Bremsbetätigungsdruck aus einem druckluftbetriebenen Bremszylinder über die Zuspanneinrichtung an den Druckstempel 10 übertragen und letztlich auf die Scheibenbremse in Form einer Zuspannkraft ausgeübt.

Ferner kann die Zuspanneinrichtung mit einer Nachstellvorrichtung versehen sein. Diese sorgt für ein gleichbleibendes Lüftspiel B der Bremse und kompensiert den fortschreitenden Verschleiß bzw. Abrieb der Bremsbeläge 4, 5. Die Bremsbeläge 4, 5 setzen sich dabei jeweils aus einer Belagrückenplatte 11, 12 und dem eigentlichen Reibbelag zusammen.

Der Bremssattel 7 übergreift von außen die Bremsscheibe 1 und die Bremsbeläge 4, 5. Eine fahrzeugaußen angeordnete Druckfläche 15 des Bremssattels 7 stützt sich gegen die Belagrückenplatte 11 des fahrzeugäußeren Bremsbelags 4 ab. Die Druckfläche 15 ist dem Druckstempel 10 gegenüberliegend an dem Bremssattel 7 ausgebildet. Auf der anderen Seite der Bremsscheibe 1 arbeitet der Druckstempel 10 unmittelbar gegen die Belagrückenplatte 12 des fahrzeuginneren Bremsbelags 5.

Innerhalb des Bremssattels 7 kann ein Wegsensor zur Messung der Relativverschiebung des Bremssattels 7 gegenüber dem Bremsträger 2 angeordnet sein. Mit diesem Sensor können die für das erfindungsgemäße Verfahren wesentlichen Wegsignale S₁, S₂, ... und W₁, W₂, ... gemessen werden. Die Messung erfolgt in herkömmlichen Längeneinheiten des SI-Einheitensystems. Der Wegsensor kann ferner am Bremsträger 2 oder an anderen in der Nähe der Scheibenbremse befindlichen Bauteilen des Fahrzeugs angeordnet sein. Auch kann der Sensor aus mehreren miteinander zusammenwirkenden Einzelbauteilen bestehen und teilweise an dem Bremssattel 7 und teilweise an dem Bremsträger 2 angeordnet sein. Der Wegsensor ist signaltechnisch mit einer Kontroll- und Steuereinheit verbunden. Die signaltechnische Verbindung kann mittels Kabelverbindung oder kabellos erfolgen.

Für das erfindungsgemäße Verfahren ist ferner entscheidend, dass ein Drucksensor zur Erfassung des Bremsbetätigungsdrucks in oder an dem Bremssattel 7 und/oder dem Bremsträger 2 angeordnet ist. Auch der Drucksensor kann aus mehreren einzelnen Komponenten bestehen. Der Drucksensor kann beispielsweise im Bremszylinder oder in unmittelbarer Nähe dazu angeordnet sein. Auch eine Anordnung in Verbindung mit der Zuspanneinrichtung ist möglich. Alternativ oder ergänzend zu einem solchen Drucksensor kann ein Kraftsensor zur Messung der zwischen den Bremsbelägen 4, 5 und der Scheibenbremse wirkenden Kräfte in der Nähe zu der Scheibenbremse und den Bremsbelägen 4, 5 angeordnet sein. Auch eine unmittelbare Anordnung an den jeweiligen Bauteilen ist möglich. Ob letztlich der Druck oder die Kraft gemessen wird, ist für die Durchführung des Verfahrens zweitrangig, da beide Größen unmittelbar ineinander überführbar sind.

Zusätzlich ist zur Durchführung des erfindungsgemäßen Verfahrens auch eine Einrichtung zum Erfassen und Speichern von Zeiten, Zeitintervallen und/oder Zeitsignalen erforderlich. Diese kann separates Bauteil oder auch in eine Kontroll- und Steuereinheit integriert sein. Eine solche Kontroll- und Steuereinheit kann in Form einer Recheneinheit bzw. eines Computers im Fahrzeug angeordnet sein. Die Recheneinheit kann an beliebiger Position des Fahrzeugs angeordnet sein, insofern eine geeignete Signalverbindung des Drucksensors, des Wegsensors sowie der Einrichtung zum Erfassen der Zeitsignale zur Recheneinheit bzw. Steuer- und Kontrolleinheit gewährleistet ist.

Der Wegsensor, Drucksensor und die Einrichtung zum Erfassen der Zeitsignale bilden die messtechnische Voraussetzung für eine kontinuierliche oder diskontinuierliche Sensierung des Wegsignals, des Bremsbetätigungsdrucks und der Zeitsignale, aus welchen rechnerisch das Bremslüftspiel B berechnet werden kann.

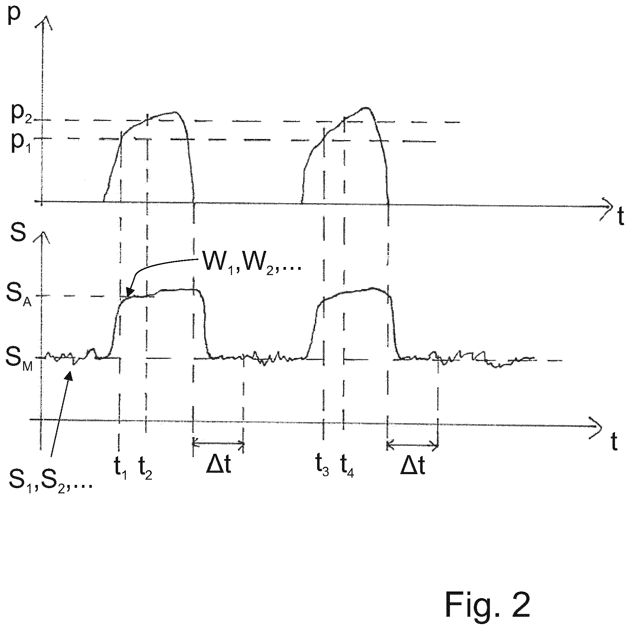

In der oberen Darstellung der Figur 2 ist der Verlauf des Drucks bzw. Bremsdrucks p als Funktion der Zeit t für zwei Bremszuspannvorgänge aufgetragen. In der unteren Darstellung der Figur 2 ist über derselben Zeitachse t die Bewegung des Bremssattels 7 relativ zu dem Bremsträger 2, also das Wegsignal S, aufgetragen. Diese Daten werden im Rahmen des erfindungsgemäßen Verfahrens von der Steuer- und Kontrolleinheit ausgewertet.

Bei nicht betätigter Bremse oszilliert die Position des Bremssattels 7 relativ zu dem Bremsträger 2 um einen Mittelwert S_{M}. Die Oszillationen treten bei freier Fahrt aufgrund von äußeren Einwirkungen auf die Scheibenbremse auf, beispielsweise Fahrbahnunebenheiten. Mit dem Aufbau von Bremsdruck p verändert sich die Position des Bremssattels 7 stark, bis es zur Zeit t₁ bei einem Wegsignal bzw. Positionswert S_{A} zur Anlage der Bremsbeläge 4, 5 an der Bremsscheibe 1 kommt. Zu dieser Zeit t₁ ist der Bremsdruck p auf einen Wert p₁ angestiegen. Dieser wird, wie auch die Druckwerte p zu anderen Zeiten t, von dem Drucksensor erfasst. Bei noch stärkerem Bremsdruck p beginnt der Bereich der Bremszuspannung, der durch einen deutlichen Druckanstieg auf einen Bremsdruck p₂ zur Zeit t₂ bei nur geringer weiterer Bewegung S gekennzeichnet ist. Der Wert des Wegsignals S liegt weiterhin ungefähr im Bereich des Werts S_{A}.

Zur genauen Berechnung des Wertes für das Wegsignal bei Anlage der Bremsbeläge 4, 5 an der Bremsscheibe 1 kann der Wert S_{A} als Mittelwert mehrerer Wegsignale W₁, W₂,... aus einem Zeitintervall t₁ bis t₂ berechnet werden, beispielsweise durch exponentielle Glättung. Gleiches gilt für den Wert S_{M}, der sich ebenfalls mittels exponentieller Glättung aus mehreren einzelnen Wegsignalen S₁, S₂,... bestimmen lässt. Notwendige Bedingung für die Aufnahme der Wegsignale S₁, S₂,... und die nachfolgende Berechnung des Mittelwerts S_{M} ist, dass die Zuspanneinrichtung vor der Aufnahme des ersten Wertes S₁ mindestens für die Dauer eines Zeitintervalls Δt nicht aktiviert war. Der untere Druckwert p₁ entspricht jenem Druck p, bei dem beide Bremsbeläge 4, 5 erstmals in Kontakt mit der Bremsscheibe 1 gelangen und an dieser anliegen.

Zwar können die Weg-, Druck- und Zeitsignale kontinuierlich gemessen und gespeichert werden, eine Auswertung dieser Signale im Sinne des erfindungsgemäßen Verfahrens zur Kontrolle des Bremslüftspiels B erfolgt jedoch nur, wenn die Scheibenbremse, insbesondere die Zuspanneinrichtung unmittelbar zuvor für einen Zeitraum Δt unbetätigt war, d. h. der Bremsdruck p für diesen Zeitraum gleich dem bei Nichtanlage der Bremsbeläge 4, 5 vorherrschenden Systemdruck war.

Außerdem kann eine Lüftspielbestimmung nur erfolgen, wenn sich das Fahrzeug im Fahrtmodus befindet, insbesondere wenn eine Mindest-Geschwindigkeit von 20 km/h vorliegt. Es kann zum Beispiel vorgesehen sein, dass die Detektion der Weg-, Druck- und Zeitsignale erst bei Erreichen der Mindest-Geschwindigkeit von 20 km/h beginnt.

Zur Kontrolle des Bremslüftspiels B einer Gleitsattel-Scheibenbremse wird unter Berücksichtigung der vorangehend beschriebenen Bedingungen das Lüftspiel B oder ein dem Lüftspiel B proportionaler Wert wie folgt bestimmt:
Zunächst werden bei nicht aktivierter und auch für ein vorangegangenes Zeitintervall Δt nicht aktivierter Zuspanneinrichtung, d. h. unbetätigter Bremse, nachfolgend eine Mehrzahl von Wegsignalen S₁, S₂, ... von einem Wegsensor erfasst und ein Mittelwert S_{M} der so erfassten Wegsignale gebildet. Die Berechnung wird von der Steuer- und Kontrolleinheit vorgenommen, nachdem die Daten über den Wegsensor und die Einrichtung zur Zeitmessung an die Steuer- und Kontrolleinheit übermittelt worden sind.

Sobald es zu einer Aktivierung der Zuspanneinrichtung kommt, wird ein Druck p₁ zu einem Zeitpunkt t₁ erfasst. Dieser Druck p₁ entspricht dem Anlagedruck der Bremsbeläge 4, 5 an der Scheibenbremse. Ferner wird ein Druck p₂ zu einem Zeitpunkt t₂ erfasst. Zu diesem Zeitpunkt ist bereits der erforderliche Bremsdruck aufgebaut. In dem so durch die Druckwerte p₁ und p₂ definierten Zeitintervall t₁ bis t₂ werden nebst den Druckwerten p eine Mehrzahl von Wegsignalen W₁, W₂, ... erfasst. Für einen zweiten Bremszyklus ersetzen die Zeiten t₃, t₄ entsprechend die Zeiten t₁ und t₂. Auch diese Werte werden an die Steuer- und Kontrolleinheit übermittelt und zur Bildung eines Mittelwerts S_{A} verwendet. Die Recheneinheit bzw. die Steuer- und Kontrolleinheit berechnet aus den Mittelwerten S_{A} und S_{M} einen Differenzwert S_{A}-S_{M}. Dieser Differenzwert entspricht dem Lüftspiel B beziehungsweise stellt einen dazu proportionalen Wert dar. Die Steuer- und Kontrolleinheit gleicht diesen Ist-Differenzwert mit intern gespeicherten Soll- oder Grenzwerten ab und trifft eine negative Lüftspielfeststellung, sofern der berechnete Differenzwert einen vorgegebenen Grenzwert überschreitet. Liegt der ermittelte Differenzwert unterhalb des Grenzwerts erfolgt keine negative Lüftspielfeststellung. Selbstverständlich kann das Lüftspiel auch bei weiteren Bremsvorgängen bestimmt werden. Wie in Figur 2 gezeigt, werden dann die Zeitpunkte t₃, t₄ und die dazu korrespondierenden Druckwerde herangezogen.

Im Falle einer Negativfeststellung wird ein Warnsignal erzeugt und in der Bordelektronik des Fahrzeugs angezeigt, beispielsweise durch Aufblinken einer Warnleuchte.

### Liste der Bezugszeichen und Indizes

- W₁, W₂, ...: Wegsignale
- S₁, S₂, ...: Wegsignale
- S_{A}: Mittelwert des Wegsignals
- S_{M}: Mittelwert des Wegsignals
- A: Raddrehachse
- p: Druck
- p₁: Druck
- p₂: Druck
- S: Wegsignal
- t₁: Zeit(wert)
- t₂: Zeit(wert)
- t₃: Zeit(wert)
- t₄: Zeit(wert)
- t: Zeit
- B: Bremslüftspiel

- 1: Bremsscheibe
- 2: Bremsträger
- 3: Führungsholm
- 4: Bremsbelag
- 5: Bremsbelag
- 6: Führungsbohrung
- 7: Bremssattel
- 10: Druckstempel
- 11: Belagrückenplatte
- 12: Belagrückenplatte
- 15: Druckfläche

## Patentansprüche

1. Verfahren zur Kontrolle des Bremslüftspiels (B) einer Gleitsattel-Scheibenbremse, die einen chassisfesten Bremsträger (2), eine Bremsscheibe (1) und einen die Bremsscheibe (1) sowie Bremsbeläge (4, 5) beidseits der Bremsscheibe (1) übergreifenden Bremssattel (7) umfasst, wobei ein Bremsbelag (4) unmittelbar gegen den Bremssattel (7) und ein anderer Bremsbelag (5) gegen eine die Betätigungskraft der Scheibenbremse erzeugende Zuspanneinrichtung abgestützt ist, bei dem
- mittels eines Wegsensors die Verschiebung des Bremssattels (7) relativ zu dem Bremsträger (2) als Wegsignal erfasst wird,
- der Bremsbetätigungsdruck durch einen Drucksensor erfasst wird,
- Zeiten und/oder Zeitintervalle erfasst werden,
und diese Weg-, Druck- und Zeitsignale einer Steuer- und Kontrolleinheit zugewiesen werden, **gekennzeichnet durch** die folgenden Schritte:
a) bei nicht aktivierter und auch für ein vorangegangenes Zeitintervall Δt nicht aktivierter Zuspanneinrichtung Erfassen einer Mehrzahl von Wegsignalen S₁, S₂, ... und Bilden eines Mittelwerts S_{M} der so erfassten Wegsignale,
b) nach der Aktivierung der Zuspanneinrichtung Erfassen eines Drucks p₁ zu einem Zeitpunkt t₁, zu dem es erstmals zum Anlegen beider Bremsbeläge (4, 5) an der Bremsscheibe (1) kommt, und eines Drucks p₂ zu einem Zeitpunkt t₂, zu dem die Zuspanneinrichtung Bremsdruck aufgebaut hat,
c) Erfassen einer Mehrzahl von Wegsignalen W₁, W₂, ... innerhalb des Zeitintervalls t₁ bis t₂ und Bilden eines Mittelwerts S_{A} der so erfassten Wegsignale,
d) Berechnung des Differenzwertes S_{A} - S_{M},
e) Treffen einer negativen Lüftspielfeststellung in der Steuer- und Kontrolleinheit, sofern der berechnete Differenzwert S_{A} - S_{M} einen vorgegebenen Grenzwert überschreitet.

2. Verfahren nach Anspruch 1, **dadurch gekennzeichnet, dass** vor der Bestimmung des Lüftspiels nach einem Bremsvorgang eine Wartezeit Δt mit nicht aktivierter Zuspanneinrichtung durchlaufen werden muss.

3. Verfahren nach den Ansprüchen 1 und 2, **dadurch gekennzeichnet, dass** die Mittelwerte S_{M}, S_{A} über ein mathematisches Mittelungsverfahren aus den Wegsignalen berechnet werden, insbesondere durch exponentielle Glättung.

4. Verfahren nach einem der Ansprüche 1 bis 3, **dadurch gekennzeichnet, dass** die Weg- und Drucksignale (S, p) kontinuierlich oder diskontinuierlich in der gleichen Zeitdomäne (t) aufgenommen werden.

5. Verfahren nach einem der Ansprüche 1 bis 4, **dadurch gekennzeichnet, dass** die Weg- und Drucksignale (S, p) simultan als Funktion der Zeit (t) aufgenommen werden.

6. Verfahren nach einem der vorangehenden Ansprüche, **dadurch gekennzeichnet, dass** die Wegsignale (S) als Funktion des Betätigungsdrucks (p) und die Drucksignale (p) als Funktion des Weges (S) darstellbar sind.

7. Verfahren nach einem der vorangehenden Ansprüche, **dadurch gekennzeichnet, dass** der Mittelwert S_{M} ein Verschleißwert der Bremsbeläge (4, 5) ist.

8. Verfahren nach einem der vorangehenden Ansprüche, **dadurch gekennzeichnet, dass** die zeitaufgelösten Weg- und Drucksignale (S, p) in der Steuer- und Kontrolleinheit verarbeitet und gespeichert werden können.

9. Verfahren nach einem der vorangehenden Ansprüche, **dadurch gekennzeichnet, dass** die Bestimmung des Verschleißwertes und/oder des Lüftspiels (B) nur während der Fahrt möglich ist.

10. Verfahren nach einem der vorangehenden Ansprüche, **dadurch gekennzeichnet, dass** bei Vorliegen einer negativen Lüftspiellfeststellung ein Warnsignal erzeugt und in der Bordelektronik des Fahrzeugs angezeigt wird, insbesondere durch Aufblinken einer Warnleuchte.

## Claims

1. Method for checking the brake clearance (B) of a sliding caliper disc brake, which comprises a brake carrier (2) fixed on the chassis, a brake disc (1) and a brake caliper (7) which overlaps the brake disc (1) as well as brake linings (4, 5) on both sides of the brake disc (1), wherein one brake lining (4) is supported directly against the brake caliper (7) and another brake lining (5) is supported against a brake application device which generates the actuating force of the disc brake, wherein
- by means of a path sensor the displacement of the brake caliper (7) relative to the brake carrier (2) is detected as a path signal,
- the brake actuation pressure is detected by a pressure sensor,
- times and/or time intervals are detected,
and these distance, pressure and time signals are assigned to a control and monitoring unit, **characterised by** the following steps:
a) in the case of a brake application device which is not activated and also a brake application device which was not activated during a preceding time interval Δt, detection of a plurality of path signals S₁, S₂, ... and formation of an average value S_{M} of the path signals thus detected,
b) after the activation of the brake application device, detection of a pressure p₁ at a time t₁ at which the application of both brake linings (4, 5) to the brake disc (1) occurs for the first time, and detection of a pressure p₂ at a time t₂ at which the brake application device has built up a brake pressure,
a) detection of a plurality of path signals W₁, W₂, ... within the time interval t₁ to t₂ and formation of an average value S_{A} of the path signals thus detected,
d) calculation of the differential value S_{A} - S_{M},
e) making a negative clearance determination in the control and monitoring unit, if the calculated differential value S_{A} - S_{M} exceeds a predetermined limiting value.

2. The method according to claim 1, **characterised in that** before the determination of the clearance after a braking operation it is necessary to run through a waiting time Δt without the brake application device being activated.

3. Method according to claims 1 and 2, **characterised in that** the average values S_{M}, S_{A} are calculated from the path signals by means of a mathematical averaging process, in particular by exponential smoothing.

4. Method according to one of claims 1 to 3, **characterised in that** the path and pressure signals (S, p) are recorded intermittently in the same time domain (t).

5. Method according to one of claims 1 to 4, **characterised in that** the path and pressure signals (S, p) are recorded intermittently in the same time domain (t).

6. Method according to one of the preceding claims, **characterised in that** the path signals (S) can be presented as a function of the actuation pressure (p) and the pressure signals (p) can be presented as a function of the path (S).

7. Method according to one of the preceding claims, **characterised in that** the average value S_{M} is a wear value of the brake linings (4, 5).

8. Method according to one of the preceding claims, **characterised in that** the time-resolved path and pressure signals (S, p) can be processed and stored in the control and monitoring unit.

9. Method according to one of the preceding claims, **characterised in that** the determination of the wear value and/or of the clearance (B) is only possible during travel.

10. Method according to one of the preceding claims, **characterised in that** in the event of a negative clearance determination a warning signal is generated and is indicated in the on-board electronics of the vehicle, in particular by flashing of a warning light.

## Revendications

1. Procédé de contrôle du jeu (B) d'un frein à disque à étrier coulissant qui comporte un support de frein (2) solidaire du châssis, un disque de frein (1) et un étrier de frein (7) chevauchant le disque de frein (1) ainsi que des garnitures de frein (4, 5) de part et d'autre du disque de frein (1), une garniture de frein (4) étant supportée directement contre l'étrier de frein (7) et une autre garniture de frein (5) étant supportée contre un dispositif de serrage produisant la force d'actionnement du frein à disque, procédé selon lequel
- le déplacement de l'étrier de frein (7) par rapport au support de frein (2) est détecté au moyen d'un capteur de course en tant que signal de course,
- la pression d'actionnement de frein est détectée au moyen d'un capteur de pression,
- des temps et/ou des intervalles de temps sont détectés,
et ces signaux de course, de pression et de temps sont assignés à une unité de commande et de contrôle, **caractérisé par** les étapes suivantes :
a) dans le cas où le dispositif de serrage n'est pas activé et n'a pas non plus été activé pendant un intervalle de temps précédent Δt, détection d'une pluralité de signaux de course S₁, S₂, ... et formation d'une valeur moyenne S_{M} des signaux de course ainsi détectés,
b) après l'activation du dispositif de serrage, détection d'une pression p₁ à un instant t₁ auquel, pour la première fois, les deux garnitures de frein (4, 5) s'appliquent contre le disque de frein (1) et d'une pression p₂ à un instant t₂ auquel le dispositif de serrage a établi la pression de freinage,
c) détection d'une pluralité de signaux de course W₁, W₂, ... dans l'intervalle de temps t₁ à t₂ et formation d'une valeur moyenne S_{A} des signaux de course ainsi détectés,
d) calcul de la valeur de différence S_{A} - S_{M},
e) constatation d'une détermination de jeu négative dans l'unité de commande et de contrôle dès lors que la valeur de différence calculée S_{A} - S_{M} dépasse une valeur limite prédéfinie.

2. Procédé selon la revendication 1, **caractérisé en ce qu'**avant la détermination du jeu après une opération de freinage, un temps d'attente Δt lors duquel le dispositif de serrage n'est pas activé doit s'écouler.

3. Procédé selon les revendications 1 et 2, **caractérisé en ce que** les valeurs moyennes S_{M}, S_{A} sont calculées à partir des signaux de course par le biais d'une procédure de calcul de moyenne mathématique, en particulier par lissage exponentiel.

4. Procédé selon l'une des revendications 1 à 3, **caractérisé en ce que** les signaux de course et de pression (S, p) sont enregistrés de manière continue ou discontinue dans le même domaine temporel (t).

5. Procédé selon l'une des revendications 1 à 4, **caractérisé en ce que** les signaux de course et de pression (S, p) sont enregistrés simultanément en tant que fonction du temps (t).

6. Procédé selon l'une des revendications précédentes, **caractérisé en ce que** les signaux de course (S) peuvent être représentés en tant que fonction de la pression d'actionnement (p) et les signaux de pression (p) peuvent être représentés en tant que fonction de la course (S).

7. Procédé selon l'une des revendications précédentes, **caractérisé en ce que** la valeur moyenne S_{M} est une valeur d'usure des garnitures de frein (4, 5).

8. Procédé selon l'une des revendications précédentes, **caractérisé en ce que** les signaux de course et de pression (S, p) à résolution temporelle peuvent être traités et mémorisés dans l'unité de commande et de contrôle.

9. Procédé selon l'une des revendications précédentes, **caractérisé en ce que** la détermination de la valeur d'usure et/ou du jeu (B) n'est possible que pendant la conduite.

10. Procédé selon l'une des revendications précédentes, **caractérisé en ce qu'**en présence d'une détermination de jeu négative, un signal d'avertissement est produit et est affiché dans l'électronique de bord du véhicule, en particulier par clignotement d'un témoin d'avertissement.
